Europäisches Patentamt

**European Patent Office**

**Office européen des brevets**

(19)

(11) **EP 0 694 162 B1**

(12) **EUROPÄISCHE PATENTSCHRIFT**

(45) Veröffentlichungstag und Bekanntmachung des Hinweises auf die Patenterteilung:
**19.12.2001 Patentblatt 2001/51**

(21) Anmeldenummer: **92909173.4**

(22) Anmeldetag: **02.05.1992**

(51) Int Cl.⁷: $G01N\ 15/06$, $G01N\ 1/22$

(86) Internationale Anmeldenummer:
**PCT/DE92/00359**

(87) Internationale Veröffentlichungsnummer:
**WO 92/21013 (26.11.1992 Gazette 1992/29)**

(54) **VERFAHREN ZUR KONTINUIERLICHEN ÜBERWACHUNG VON STAUBEMISSIONEN IN STRÖMENDEN MEDIEN**

PROCESS FOR CONTINUOUSLY MONITORING EMISSIONS OF SOOT IN FLOWING MEDIA

PROCEDE POUR LE CONTROLE EN CONTINU D'EMISSION DE POUSSIERES DANS DES MILIEUX SOUMIS A UN ECOULEMENT

(84) Benannte Vertragsstaaten:
**AT BE CH FR GB LI NL SE**

(30) Priorität: **10.05.1991 DE 4115212**

(43) Veröffentlichungstag der Anmeldung:
**31.01.1996 Patentblatt 1996/05**

(73) Patentinhaber: **Forschungszentrum Karlsruhe GmbH**
**76133 Karlsruhe (DE)**

(72) Erfinder:
- **MERZ, Albert**
  **D-7500 Karlsruhe 1 (DE)**
- **WALTER, Roland**
  **D-7523 Graben-Neudorf (DE)**
- **BECKER, Ernst**
  **D-7054 Korb (DE)**
- **BRIELMAIER, Thomas**
  **D-7906 Blaustein (DE)**

(74) Vertreter: **Gottlob, Peter, Dipl. Ing.**
**Forschungszentrum Karlsruhe GmbH**
**Stabsabteilung Patente und Lizenzen**
**Weberstrasse 5**
**76133 Karlsruhe (DE)**

(56) Entgegenhaltungen:
EP-A- 0 164 591    BE-A- 881 910
DE-A- 3 502 457    US-A- 4 633 706

- **PATENT ABSTRACTS OF JAPAN vol. 9, no. 62 (P-342)(1785) 19. März 1985 & JP,A,59 196 441 ( TOYOTA JIDOSHA ) 7. November 1984**

EP 0 694 162 B1

**Beschreibung**

Die vorliegende Erfindung betrifft ein Verfahren zur kontinuierlichen Überwachung von Staubemissionen in strömenden Medien unter isokinetischer Teilstromentnahme von Proben aus dem Hauptgasstrom eines Schadstoffemitters mittels einer Sonde und mit abscheiden der Stäube durch Kuchenfiltration auf einem Filter.

Bekannte Verfahren zur Emissionsdauerüberwachung sind Absorptionsverfahren von Lichtwellen oder sonstigen Strahlungsquellen. Weiter ist bekannt,. Filter über ihren Druckverlust zu überwachen, indem bei einem Schwellwert davon ausgegangen wird, daß der Filter beladen ist und ausgewechselt werden muß. Erst danach läßt sich nachträglich die integrale Menge der auf dem Filter abgeschiedenen Partikel gravimetrisch bestimmen. Eine kontinuierliche Überwachung der abgeschiedenen Menge in vorgegebenen Zeitschritten läßt sich mit dieser Methode nicht erzielen.

Im Einzelnen ist es aus der US 4 633 706 bekannt, den Druckabfall eines Filters infolge der in einem Meßzyklus angefallenen Staubmenge zu bestimmen. Damit lässt sich jedoch nur die Menge des auf dem Filter angefallenen Staubes zu einem bestimmten Zeitpunkt ermitteln. Eine zeitliche Zuordnung der Emission ist nicht vorgesehen.

Aus der DE 35 02 457 ist ein weiteres Verfahren bekannt, bei dem ebenfalls nur ein Summenwert über einen Meßzyklus gebildet wird. Der Meßzyklus wird durch den Druckabfall am Filter bestimmt, wobei nach dem Erreichen eines gewissen Schwellwertes der Zyklus beendet ist. Bei dem Verfahren wird weder die Pumpe nachgeregelt noch der Volumenstrom gemessen, wodurch auch keine Messung der Filtrationsgeschwindigkeit möglich ist.

Letztlich soll die Absaugung bei konstantem Fördervolumen erfolgen, so daß Änderungen im Abgasstrom z. B. durch Änderung der Betriebsbedingungen bei der Verbrennung nur durch ein anderes Sondenmundstück berücksichtigt werden können. Echte gleichförmige isokinetische Bedingungen über alle Betriebzustände können daher mit der Sonde nicht erreicht werden. Auch dieses Verfahren erlaubt somit keine kontinuierliche Zuordnung der Schadstoffe über die Zeit, wobei auch isokinetische Bedingungen allein dafür nicht genügen.

Aus der EP 01 64 591 ist weiter ein Verfahren zur Probenahme von Stäuben unter streng isokinetischen Bedingungen bekannt. Bei dem Verfahren wird jedoch nur ein Mittelwert von Einzelproben über eine bestimmte Beprobungszeit gebildet, eine konstante Staubemissionsmessung wird jedoch nicht durchgeführt.

Eine solche ist auch mit dem Verfahren nach der BE-A-881 910 nicht zu erzielen. Diese beschreibt ein Verfahren, bei welchem ebenfalls "batchweise" gearbeitet wird. Dazu wird nach bestimmter Zeit ein Filter gewogen, der in den Abgasstrom eingeschaltet ist. Die Messung erfolgt somit nur in Zeitintervallen, wobei sich mit der beschriebenen Meßvorrichtung auch hier keine echten isokinetischen Bedingungen an der Absaugstelle erzielen lassen. Somit gelten für dieses Verfahren auch die eingangs geschilderten Einschränkungen.

Aufgabe der vorliegenden Erfindung ist es nun, ein Verfahren anzugeben, mit welchem die kontinuierliche Überwachung von Staubemissionen mit nachträglicher Archivierungsmöglichkeit des Probenmaterials im Hinblick auf die analytische Bestimmung von Staubinhaltsstoffen wie Schwermetallen, Dioxinen usw. ermöglicht wird.

Zur Lösung dieser Aufgabe schlägt nun die vorliegende Erfindung ein Verfahren gemäß dem Patentanspruch vor.

Das erfindungsgemäße Verfahren geht davon aus, daß der Druckverlust bei der Filtration abhängig von der Höhe des Filterkuchens, der Filtrationsgeschwindigkeit, der Viskosität des Gases und den Eigenschaften wie Korngröße, Kornform, Hohlraumvolumen etc. des abgeschiedenen Staubes abhängt. Sie geht weiter davon aus, daß sich im Verlauf des Filtrationsprozesses die Eigenschaften des abgeschiedenen Stoffes nicht wesentlich verändern, so kann über die Messung des Druckverlustes unter Berücksichtigung der Geschwindigkeit und der Viskosität die zeitliche Zunahme der Schichtdicke und damit der abgeschiedenen Stoffmenge ermittelt werden.

Weitere Einzelheiten des erfindungsgemäßen Verfahrens werden im folgenden anhand einer Figur näher erläutert:

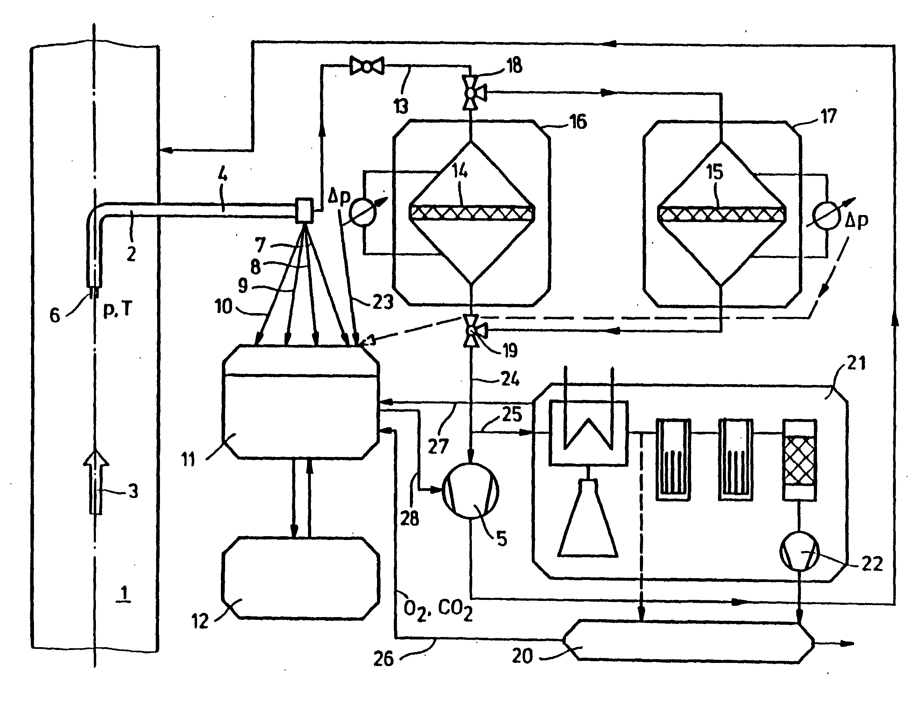

Die Figur zeigt das Schema einer Meßeinrichtung, mit welcher das neue Verfahren durchgeführt werden kann. Dies ermöglicht, das kontinuierliche Bestimmen von Staubgehalten in strömenden Medien, unter isokinetischer Teilstromentnahme von Proben mit Abscheiden der Stäube oder Aerosole durch Kuchenfiltration auf einem Filter und Messung des Druckabfalles am Filter zur Bestimmung seines Beladegrades.

In den Rauchkanal 1 eines Schadstoffemitters ragt eine Entnahmesonde, bzw. ein Absaugstutzen 2, mittels welcher ein repräsentativer Teilstrom des Hauptgastromes 3 entnommen werden soll. Die Entnahme erfolgt dabei isokinetisch, bzw. Geschwindigkeitsgleich, wobei der erforderliche Unterdruck in der Saugleitung 4 durch das Sauggebläse 5 erzeugt wird. Die geschwindigkeitsgleiche Einstellung der Entnahmegeschwindigkeit des Teilgasstromes an der Sondenmündung 6 erfolgt durch Drehzahlregelung des HF-Antriebsmotores vom Sauggebläse 5 über eine Frequenzregelung. Eine isokinetische Regelung der Absaugung an der Sondenmündung 6 bedingt die Dreidruckmessung $P_G$ Gesamtdruck 7, $pst_T$ statischer Druck des Teilgasstromes 8, $pst_H$ statischer Druck des Hauptgasstromes 9 sowie eine Temperaturmessung 10 (T) an der Sonde, um den momentanen Istzustand in der unmittelbaren Umgebung der Entnahmestelle an der Sondenmündung 6 zu kennen. Die Drücke werden durch Schlitze oder Kanäle in der Sondenwand übertragen. Aus diesen Meßdaten erzeugt eine Meß- und Regeleinheit 11 mit einer Bedieneinheit 12 die der erforderlichen Drehzahl des Sauggebläses 5 zugehörige Frequenz für dessen Antriebsmotor.

Die Absaugung erfolgt nun weiter aus der Saugleitung 4 über die Leitung 13 wechselseitig umschaltbar durch die beiden Filtergehäuse 16 und 17, in welchen er fortlaufend auf den Feinstfiltern 14 und 15 abgeschieden wird. Für einen kontinuierlichen Langzeit- oder Dauerbetrieb sind deshalb zwei mittels der Hähne 18 und 19 umschaltbare Filter 14 und 15 vorgesehen.

Nach den Filterstufen der Filter 14 und 15 ist in die Ableitung 24 eine Bypaßleitung 25 geschaltet, über welcher konstant eine kleine Teilstrommenge entnommen wird, die einer Gaswäsche durch Kondensation, Adsorption oder Absorption in dem Waschmodul 21 unterzogen wird. In diesem Modul 21 werden lösliche gasförmige Schadstoffe absorbiert bzw. ausgewaschen.

Die mittels der kleinen Pumpe 22 entnommene Teilstrommenge wird z.B. durch eine Strömungsdrossel gegenüber der abgesaugten Gasmenge klein gehalten, um die isokinetische Regelung - 'Änderung der abgesaugten Gastfeststoffmenge durch sich im Rauchgaskanal 1 ändernde Strömungszustände- nicht zu beeinträchtigen.

Die Abscheideorgane 14 und 15, sowie das Sauggebläse 5 und die Saugleitung 4 sind mit einer Heizung versehen, um Taupunktunterschreitungen und damit Kondensation von gasförmig vorliegenden Schadstoffverbindungen im Bereich der Feststoffabtrennung zu vermeiden. Dies ist wichtig für eine eindeutige Unterscheidung zwischen feststoffgetragenen Schadstoffen und gasförmig im Rauchgas vorliegenden. Nach der Abscheidung gelangt der entnommene Teilgasluftstrom am Sauggebläse 5 wieder in den Kanal 1 zurück bzw. hinter der Pumpe 22 wieder ins Freie.

An den Filtern 14 und 15 wird nun der Differenzdruck $\Delta$ P über dem jeweiligen Filter gemessen und als Regelgröße 23 der Regeleinheit 11 zugeführt. Die Regelgrößen 26, 27 und 28 übertragen die Werte für die Gasanalyse, die Gasfeuchte und die Gebläsemotorregelung.

Das neue Verfahren wird nun mit der beschriebenen Meßeinrichtung wie folgt durchgeführt:

Zunächst wird der Druckverlust des unbelegten Filters 14 oder 15 beim Start des Abscheideprozesses ermittelt. Dies geschieht durch Einlegen der Filter 14, 15 in die Kammern 16 und 17, beim ersten Anströmen ergibt sich der Druckverlust der frischen Filter, sobald ein stabiler Betriebspunkt erreicht ist. Die Filter bestehen aus hochreinen Quarzfaserfiltern aus normalerweise bandförmig gewobenen Bahnen.

Danach wird stetig oder taktweise der momentane Druckverlust unter ständigem Aufrechterhalten der isokinetischen Teilstrom.entnahmebedingungen bestimmt. Dabei werden die Kenngrößen der isokinetischen Bedingungen ständig verarbeitet. Damit wird. laufend der momentane Druckverlust gemessen und dessen zeitliche Änderung berücksichtigt. Letztlich wird daraus die zeitliche Änderung der auf dem Filter abgeschiedenen Staubmenge bestimmt.

Das ständige Aufrechterhalten der isokinetischen Bedingungen ist für die Abscheidung der Stäube auf dem Filter an sich unwesentlich, die Aufrechterhaltung ist vielmehr ausschließlich wichtig für die rechnerische Verarbeitung der Meßwerte.

Weiterhin werden die zugehörigen Strömungsparameter Systemdrücke, Systemtemperatur, Gaszusammensetzung hinsichtlich $CO_2$, $O_2$ und Gasfeuchte ständig gemessen. Dies geschieht u.a. in dem Waschmodul 21 und der Analyseeinheit 20 sowie an der Sondenmündung 6, siehe auch die Figur. Die dort ermittelten Meßwerte werden der Meß- und Regeleinheit 11 ständig eingegeben.

Dort werden die gasrelevanten Daten wie Dichte, Viskosität, Volumenstrom und Reynoldszahl aus den im vorhergehenden Schritt ermittelten Daten errechnet. Diese Daten werden für die weitere Berechnung benötigt und ständig aktualisiert.

Weiter wird nun die absolute, auf den Filtern 14 und 15 abgeschiedene Staubmenge und deren zeitliche Änderung mit Hilfe der Filtergleichung berechnet.

Dies erfolgt unter Verwendung der Werte aus den vorhergehenden Schritten. Die Filtergleichung ist bekannt und bezieht sich auf die Durchströmung von Haufwerken bzw. von auf Filterflächen abgeschiedenen Partikelkollektiven oder Filterkuchen. Die Berechnung muß zeitlich mit der Bestimmung der Druckverluste und mit der Berechnung der Strömungs- und Gasparameter erfolgen.

Letztlich muß die im jeweiligen Zeitraum abgeschiedene Staubmenge zum momentanen Teilgasvolumenstrom im Normzustand zugeordnet werden. Dadurch erhält man die Emissionsrate:

$$\frac{Masse}{Volumen} ,$$

wobei das Volumen auf einen Normzustand umgerechnet ist (z.B. 1013 mbar Druck, 273°K, Feuchte 0).

Anschließend erfolgt noch eine gravimetrische Bestimmung der abgeschiedenen Staubmenge nach Abschluß des Filtrationsprozesses zum Vergleich mit dem Summenwert der Berechnung zur Korrektur der Stoffkonstante bei einer evtl. Abweichung.

Bei einer Dauerüberwachung von Staubemissionen müssen die Tagsesemissionsmittelwerte und die Halbstundenmittelwerte angegeben werden. Die Überprüfung nach einem Meßzyklus ergibt rückwirkend die Qualität der berechneten angegebenen Emissionsraten. Dabei muß bei einer Abweichung rückwirkend eine Korrektur erfolgen. Dies ist z.B. dann der Fall, wenn sich die Qualität der abgeschiedenen Stäube im Hinblick auf die Kuchendurchströmung geändert hat, z.B. könnte sich die Partikelzusammensetzung ändern.

Die Berechnungsschritte können taktweise erfolgen, wobei die Taktzeiten sich in Sekundengröße bewegen. D.h. die Berechnungen werden ständig mit den aktuellen Daten taktweise wiederholt. Im folgenden werden das Berechnungsschema aufgeführt, sowie Meßwerte eines Beispieles angegeben:

LPS Messung der Staubbeladung:

Die Zunahme des Druckverlustes am Filter ist abhängig von der Filtrationsgeschwindigkeit $v_F$, der Filterbelegung h und der Zähigkeit η.

Die Änderung Δh der Filterbelegung kann damit berechnet werden:

$$(1) \qquad h = \frac{\Delta P_F}{\eta \cdot v_F} \qquad \Delta h_i = h_{i+1} - h_i \qquad h\ (10^6/m)$$

Der Druckverlust $\Delta P_F$ wird gemessen, die Viskosität η wird bereits beim Isokinetik-Regelkreis berechnet und die Filtrationsgeschwindigkeit $v_F$ errechnet sich aus der Teilstromgeschwindigkeit:

$$(2) \qquad v_F = v_T \cdot \frac{d_i^2}{(300\ mm)^2} \qquad d_i\ (mm)$$

Beim Start der Probenahme wird der Wert $h_o$ ermittelt sobald ein stabilter Betriebspunkt des Systems erreicht ist. (Der Zeitpunkt für die Ermittlung des Wertes $h_o$ soll in Systemebene 2 variabel eingegeben werden können und mit einem Wert von 90s vorbelegt sein).

Die Werte von h sollen im Sekundentakt ermittelt werden und über einen Analogausgang auf einem Schreiber aufgezeichnet werden können. Bezeichnung: "Filterbelegung"

Nach jeweils 30 Minuten wird der aktuelle Wert von h mit dem 30 Minuten zurückliegenden Wert verglichen. Die Differenz $\Delta h_i$ wird mit der abgeschätzten Emissionskonstante $E_a$ multipliziert, wodurch sich die abgeschätzte Staubmenge $\Delta m_{ai}$ ergibt, die, bezogen auf das in diesem Zeitraum abgesaugte Teilgasvolumen, die abgeschätzte Staubbeladung

$$B_{ai} = \frac{\Delta m_{ai}}{V_{Ti}} \qquad B_{ai}(mg/m_n^3)$$

ergibt.

Beim Ende der Probenahme, kurz vor dem Schließen des Absperrventils, wird nochmals der Wert h ermittelt und gespeichert.

Nach Beendigung der Probenahme wird die Staubmenge durch Wägung bestimmt und eingegeben. Die tatsächliche Emissionskonstante $E_r$ wird errechnet und die abgeschätzten Werte für die Staubbeladung werden korrigiert.

Die tatsächliche Emissionskonstante $E_r$ errechnet sich aus der gesamten Staubmenge und der Differenz der Werte für h zwischen dem Anfang und dem Ende der Probenahme.

$$E_r = \frac{m}{h_{Ende} - h_o} \qquad E_r(mg \cdot m/10^6)$$

Dieser Wert der Emissionskonstante dient als neuer Wert $E_a$ für die darauffolgende Probenahme. Es muß aber auch die Möglichkeit geben, in Systemebene 2 einen anderen Wert für $E_a$ einzugeben.

Die Anzeige der Halbstundenmittelwerte soll sowohl am Bildschirm als auch auf dem Endprotokoll als Balkendiagramm mit maximal 48 Werten erfolgen.

Beispiel Emissionsfilter TAMARA

Sonde $d_i$ = 16 mm

| t [h] | Δp . [mbcr] | $v_T$ [m/s] | $v_F$ [m/s] | η [$10^{-6}$ Pa·s] | h [$10^6$/m] | $\Delta m_a$ [mg] | $\Delta m_r$ [mg] |
|---|---|---|---|---|---|---|---|
| 0 | 4,35 | 10,0 | 0,023 | 20,0 | 777 - $h_o$ | 0 | 0 |

(fortgesetzt)

| t [h] | $\Delta p$ . [mbcr] | $v_T$ [m/s] | $v_F$ [m/s] | $\eta$ [$10^{-6}$ Pa·s] | h [$10^6$/m] | $\Delta m_a$ [mg] | $\Delta m_r$ [mg] |
|---|---|---|---|---|---|---|---|
| 0,5 | 4,40 | 9,5 | 0,027 | 20,0 | 815 | 10,72 | 12,04 |
| 1 | 4,80 | 9,5 | 0,027 | 19,8 | 898 | 23,42 | 25,30 |
| 1,5 | 5.30 | 9,8 | 0,023 | 19,8 | 956 | 16,37 | 18,38 |
| 2 | 5,80 | 10,0 | 0,028 | 19,6 | 1057 | 23,50 | 32,0 |
| 2,5 | 6,20 | 9,5 | 0.027 | 19,6 | 1172 | 32,45 | 36,44 |
| 3 | 6,80 | 9,8 | 0,023 | 19,6 | 1239 | 18,91 | 21,24 |
| 3,5 | 7,30 | 10,2 | 0,029 | 19,8 | 1271 | 9,03 | 10,14 |
| 4 | 7,60 | 10,5 | 0.030 | 19,8 | 1279 | 2,25 | 2,54 |
| 4,5 | 7,80 | 9,8 | 0,023 | 20,0 | 1393 | 32,17 | 35,13 |
| 5 | 8,60 | 10,0 | 0,023 | 20,0 | 1536 | 40,35 | 45,32 |
| 20 | 24,20 | 10,0 | 0,023 | 20,0 | 4321 | | |

Die Abschätzung der Staubmenge war einer Emissionskonstante $E_a$ = 0,2822/$10^6$ (mg·m) zugrundegelegt. Die Wägung ergab eine Staubmenge von 1123 mg, die Zunahme der Größe h betrug während der gesamten Probenahmezeit 3544 · $10^6$/m. Die tatsächliche Emissionskonstante

$E_{real}$ beträgt also $E_r = \dfrac{m_{ges}}{\Sigma \Delta h_i}$ = 0,3169 mg·m/$10^6$.

Die abgeschätzten Werte müssen also mit dem Faktor $\dfrac{E_r}{E_a}$ multipliziert werden.

Ein wesentlicher Vorteil des neuen Verfahrens ist, daß bei jeder einzelnen Probenahme die Gerätekennlinie durch die Gravimetrie, dem klassischen Verfahren zur Staubgehaltsbestimmung, überprüft werden kann und ggf. eine Nachkalibrierung erfolgen kann. Durch die Anpassung der geometrischen Größen des Probenahmesystems läßt sich das Verfahren sowohl zur Messung höherer als auch geringer Staubgehalte einsetzen.

**Bezugszeichenliste**

1 Rauchgaskanal
2 Sonde, Absaugstutzen
3 Hauptgasstrom
4 Saugleitung
5 Sauggebläse
6 Sondenmündung
7 Gesamtdruck $p_G$
8 statischer Druckteilgasstrom $pst_T$
9 statischer Druckhauptgasstrom $pst_H$
10 Temperatur T
11 Meß- und Regeleinheit
12 Bedieneinheit
13 Leitung
14 Filter
15 Filter
16 Filtergehäuse
17 Filtergehäuse
18 Hahn
19 Hahn
20 Analyseeinheit
21 Waschmodul
22 Pumpe
23 Differenzdruck
24 Ableitung
25 Bypaßleitung
26 Regelgröße Gas

27 Regelgröße Feuchte
28 Regelgröße Gebläsemotor

**Patentansprüche**

1.  Verfahren zur kontinuierlichen Überwachung von Staubemissionen in strömenden Medien unter isokinetischer Teilstromentnahme von Proben aus dem Hauptgasstrom eines Schadstoffemitters mittels einer Sonde und mit Abscheiden der Stäube durch Kuchenfiltration auf einem Filter, wobei

    a) zum ständigen Aufrechterhalten der isokinetischen Teilstromentnahme-Bedingungen an der Teilstromentnahme-Sonde folgende Strömungsparameter gemessen werden:

    -   der Gesamtdruck $p_G$,
    -   der statische Druck $p_{st,H}$ des Hauptgasstroms,
    -   der statische Druck $p_{st,T}$ des Teilgasstroms,
    -   die Systemtemperatur T,
    -   die Gasfeuchte,

    und zusätzlich an einer dem Filter nachgeschalteten Analyseeinheit die Gaszusammensetzung gemessen wird,
    und aus diesen Messgrössen die Dichte, die Viskosität $\eta$, der Volumenstrom und die Reynoldszahl berechnet werden,

    b) zur Bestimmung der Staubemission

    i) der Druckverlust im unbelegten Filter beim Start des Abscheideprozesses gemessen wird,
    ii) der momentane Druckverlust $\Delta p_F$ im Filter unter ständigem Aufrechterhalten der isokinetischen Teilstromentnahme-Bedingungen stetig weiter gemessen wird,
    iii) die Filterbelegung $h = \Delta p_F / (\eta\, v_F)$, wobei $v_F$ die Filtrationsgeschwindigkeit ist, berechnet wird,
    iv) die zeitliche Änderung der Filterbelegung $\Delta h_i$ über die Beziehung $\Delta h_i = h_{i+1} - h_i$ dargestellt wird, wobei $h_i$ die Filterbelegung zu einem Zeitpunkt i und $h_{i+1}$ die Filterbelegung zu einem Zeitpunkt i+1 ist,
    v) die Emissionskonstante $E_r$ aus der Beziehung $E_r = m/(h_{Ende} - h_0)$ ermittelt wird, wobei m die während der gesamten Probennahmezeit auf dem Filter abgeschiedene Staubmenge und $h_{Ende} - h_0$ die Differenz der Werte der Filterbelegung zwischen dem Anfang und dem Ende der Probennahme ist,
    vi) die zeitliche Änderung der auf dem Filter abgeschiedenen Staubmenge $\Delta m_i$ aus dem Produkt der zeitlichen Änderung der Filterbelegung $\Delta h_i$ und der Emissionskonstante $E_r$ berechnet wird, und
    vii) die im jeweiligen Zeitraum abgeschiedene Staubmenge zum momentanen Teilgasvolumen im Normzustand zugeordnet wird.

**Claims**

1.  Method of continuously monitoring dust emissions in flowing media by the isokinetic partial flow taking of samples from the main gas flow of a pollutant emitter by means of a probe sampling device and with the separation of the dusts by cake filtration on a filter, wherein

    a) for constantly maintaining the isokinetic partial flow sampling conditions at the partial flow sampling probe, the following flow parameters are measured:

    -   the overall pressure $p_G$,
    -   the static pressure $p_{st,H}$ of the main gas flow,
    -   the static pressure $p_{st,T}$ of the partial gas flow,
    -   the system temperature T, and
    -   the gas humidity,

    and, in addition, the gas composition is measured at an analysis unit connected downstream of the filter, and the density, the viscosity $\eta$, the volumetric flow rate and the Reynolds number are calculated from these measured variables,

b) for determining the dust emission,

i) the pressure loss in the uncoated filter is measured at the start of the separation process,
ii) the instantaneous pressure loss $\Delta p_F$ in the filter is continuously being measured further whilst the isokinetic partial flow sampling conditions are constantly maintained,
iii) the filter coating h = $\Delta p_F /(\eta \, v_F)$ is calculated, wherein $v_F$ is the filtration rate,
iv) the time change of the filter coating $\Delta h_i$ is represented by the equation $\Delta h_i = h_{i+1} - h_i$, wherein $h_i$ is the filter coating at one point in time i, and $h_{i+1}$ is the filter coating at one point in time i+1,
v) the emission constant $E_r$ is determined from the equation $E_r = m/(h_{end} - h_0)$, wherein m is the quantity of dust deposited on the filter during the entire sampling time, and $h_{end} - h_0$ is the difference in the values of the filter coating between the beginning and the end of the sampling process,
vi) the time change of the quantity of dust $\Delta m_i$, deposited on the filter, is calculated from the product of the time change of the filter coating $\Delta h_i$ and the emission constant $E_r$, and
vii) the quantity of dust, deposited in the particular period, is associated with the instantaneous partial gas volume in the normal state.


**Revendications**

1. Procédé de surveillance en continu des émissions de poussières de fluides en circulation par prélèvement d'une veine partielle isocinétique d'échantillons de la veine de gaz principale d'un émetteur de matière polluante à l'aide d'une sonde et séparation des poussières par filtration dans un gâteau de filtre,

a) pour maintenir en permanence les conditions de prélèvement de veines partielles isocinétiques on mesure sur la sonde de prélèvement de veine partielle les paramètres d'écoulement suivants :

- pression totale ($P_G$)
- pression statique ($P_{st,H}$) de la veine de gaz principale
- pression statique ($P_{st,T}$) de la veine de gaz partielle
- température du système (T),
- humidité du gaz,

et en plus dans une unité d'analyse en aval du filtre on mesure la composition totale du gaz et
à partir des grandeurs de mesure on calcule la densité, la viscosité ($\eta$), le débit volumique et le nombre de Reynold,
b) pour déterminer l'émission de poussières :

i) on mesure la perte de charge dans le filtre non occupé, au début du procédé de séparation,
ii) on mesure en continu la perte de charge instantanée ($\Delta p_F$) dans le filtre en maintenant en permanence les conditions de prélèvement de veines partielles isocinétiques,
iii) on calcule le dépôt dans le filtre (h = $\Delta p_F/(\eta \, v_F)$) relation dans laquelle ($v_F$) représente la vitesse de filtration,
iv) on représente la variation dans le temps de l'occupation du filtre ($\Delta h_i$) par la relation ($\Delta h_i = h_{i+1} \rightarrow h_i$), dans laquelle ($h_i$) représente l'occupation du filtre à l'instant (i) et ($h_{i+1}$) l'occupation du filtre à l'instant (i+1),
v) on détermine la constante d'émission ($E_r$) par la relation $E_r = m/(h_{Fin} - h_0)$, dans la (m) représente la quantité de poussières déposée sur le filtre pendant toute la durée de prélèvement de l'échantillon et ($h_{Fin} - h_0$) représente la différence des valeurs d'occupation du filtre entre le début et la fin du prélèvement de l'échantillon,
vi) on calcule la variation dans le temps de la quantité de poussières ($\Delta m_i$) déposé sur le filtre à partir du produit de la variation dans le temps de l'occupation du filtre ($\Delta h_i$) et de la constante d'émission ($E_r$) et
vii) on associe la quantité de poussières déposée dans la période respective au volume partiel de gaz, instantané dans des conditions normales.